# EUROPÄISCHE PATENTSCHRIFT

(11) **EP 3 104 471 B1**
(45) Veröffentlichungstag und Bekanntmachung des Hinweises auf die Patenterteilung: **15.04.2020**
(21) Anmeldenummer: 15171139.7
(22) Anmeldetag: 09.06.2015
(51) Int. Cl.: H01R 43/28, H01R 13/6463

(54) **KABELBEARBEITUNGSEINRICHTUNG ZUR BEARBEITUNG VON KABELADERN EINES MEHRADRIGEN KABELS**
CABLE PROCESSING DEVICE FOR PROCESSING CABLE CORES OF A MULTI-CORE CABLE
DISPOSITIF DE TRAITEMENT DE CÂBLE DESTINÉ AU TRAITEMENT D'UNE ÂME D'UN CÂBLE MULTIFILAIRE

(43) Veröffentlichungstag der Anmeldung: 14.12.2016
(73) Patentinhaber: Komax Holding AG, 6036 Dierikon (CH)
(72) Erfinder: Dober, Urs, 6403 Küssnacht (CH)
(74) Vertreter: Inventio AG

(56) Entgegenhaltungen:
- EP-A1- 0 748 019
- JP-U- H0 289 374
- JP-U- H0 289 375
- US-A- 3 891 013
- US-A1- 2003 199 192

## Beschreibung

Die Erfindung betrifft eine Kabelbearbeitungseinrichtung zur Bearbeitung von Kabeladern eines mehradrigen Kabels. Die Kabelbearbeitungseinrichtung eignet sich insbesondere zur Bearbeitung von vertwisteten Kabeladern eines mehradrigen, sich entlang einer Kabellängsachse erstreckenden Rundkabels.

Zum Verarbeiten von mehradrigen Kabeln für die Kabelkonfektionierung kann es notwendig sein, die Kabeladern des Kabels so zu bearbeiten, dass danach die einzelnen Kabeladern danach einfach abisoliert und beispielsweise mit Crimpkontakten versehen werden können. In der EP 1 135 836 B1 ist ein Handwerkzeug zu einem derartigen Bearbeiten von Kabeladern eines mehradrigen Kabels bekannt geworden. Damit das mehradrige Kabel mit einem Steckergehäuse bestückt werden kann, müssen die durch Abisolieren und Umlegen der Kabelabschirmung freigelegten Kabeladern voneinander separiert, abisoliert und entsprechend den Einführöffnungen im Steckergehäuse in die richtige Lage gebracht werden. Hierzu ist in einem Seitenbereich des Handwerkzeugs eine Lochschablone zum Erstellen der gewünschten Lage vorgesehen, in die die Enden der Kabeladern von Hand eingeführt werden können.

Aus der DE 10 2004 004 978 B4 ist eine Kabelbearbeitungseinrichtung zur Vereinzelung von Litzen eines mehradrigen Kabels bekannt geworden. Diese Kabelbearbeitungseinrichtung umfasst Klemmvorrichtungen, mit deren Hilfe unter Ausnutzung der Klemmwirkung die Litzen zunächst aufgespreizt werden. Zur weiteren Bearbeitung der Litzen umfasst die Kabelbearbeitungseinrichtung weiter einen Fangdorn, an dessen Aussenmantel Nuten zur Aufnahme der Litzen eingelassen sind. Durch Drehen des Fangdorns können die Litzen aufgefächert und ausgerichtet werden. Zum Vorformen der Litzen wird ein ringförmiges Überstreifelement über die Litzen gefahren, der die Litzen in die Nuten des Fangdorns drückt. Die Kabelbearbeitungseinrichtung ist vor allem wegen der notwendigen Drehbewegung aufwendig und schwierig betreibbar. Ein weiterer Nachteil besteht darin, dass vergleichsweise grosse Abmantellängen notwendig sind, damit ausreichend lange Litzenenden vorliegen.

Die US 2014/0115855 A1 zeigt eine Kabelbearbeitungseinrichtung und ein Verfahren, bei dem die Kabeladern mittels Druckluft separiert werden. In der Praxis hat sich gezeigt, dass die Kabeladern nicht in eine genügend definierte Endlage gebracht werden können. Demzufolge müssen die Kabeladern für die spätere Konfektionierung nachbearbeitet werden.

Die JPH0289374U zeigt eine Kabelbearbeitungseinrichtung gemäß des Oberbegriffs des Anspruchs 1.

Es ist deshalb eine Aufgabe der vorliegenden Erfindung, die Nachteile des Bekannten zu vermeiden und insbesondere eine Kabelbearbeitungseinrichtung zur Bearbeitung von Kabeladern eines mehradrigen Kabels zu schaffen, die einfach und effizient betreibbar ist. Die Kabelbearbeitungseinrichtung soll weiter insbesondere einfach automatisierbar sein. Erfindungsgemäss wird diese Aufgabe mit einer Kabelbearbeitungseinrichtung mit den Merkmalen des Anspruchs 1 gelöst. Die Kabelbearbeitungseinrichtung zur Bearbeitung von Kabeladern eines mehradrigen Kabels weist wenigstens zwei aufeinander zu bewegbare Trennelemente auf, die zwischen die Kabeladern einfahrbar sind und die - nach dem Einfahren zwischen die Kabeladern - kämmend entlang den Kabeladern fahrbar sind. Das sich entlang einer Kabellängsachse erstreckende Kabel kann nach aussen hin durch eine Mantelisolierung geschützt sein, die die Kabeladern umgibt. Unter Bearbeitung wird hier die endseitige Bearbeitung eines mehradrigen Kabels verstanden, bei dem die Kabeladern bzw. deren Enden schon - beispielsweise durch Abisolieren des Kabels, bei dem die Mantelisolierung endseitig entfernt wird - freiliegen. Mit der Kabelbearbeitungseinrichtung werden somit die von der Mantelisolierung und allenfalls von der Abschirmung (Schirmgeflecht, Schirmfolie) befreiten Aderenden der Kabeladern bearbeitet. Die nachfolgend im Detail beschriebene Funktionalität der Kabelbearbeitungseinrichtung sowie die einzelnen, auf der Kabelbearbeitungseinrichtung ausgeführten Verfahrensschritte betreffen folglich das Ende des Kabels mit den freigelegten Enden der Kabeladern.

Beim Einfahren der Trennelemente dringen die Trennelemente zwischen die Kabeladern ein und drücken die Kabeladern wenigstens bereichsweise auseinander. Diese Zustellbewegung führt somit zu einer punktuellen Separierung der Kabeladern. Für die weitere Separierung werden die eingedrungenen Trennelemente in Richtung der Kabellängsachse, und insbesondere in Richtung des freien Endes eines Kabelendes, bewegt. Durch diesen Kämmvorgang werden die Kabeladern nicht nur separiert, sondern auch axial ausgerichtet.

Dadurch, dass die Kabelbearbeitungseinrichtung wenigstens zwei aufeinander zu bewegbare Trennelemente aufweist, die zum Separieren der aneinander liegenden, gegebenenfalls vertwisteten Kabeladern zwischen die vorzugsweise freigelegten Enden der Kabeladern einfahrbar und die kämmend entlang der Kabeladern bzw. entlang der Kabellängsachse fahrbar sind, können die Kabeladern auf vorteilhafte Art und Weise endseitig bearbeitet werden. Nach dem mittels den Trennelementen vorgenommenen Kämmvorgang sind die Kabeladern voneinander gelöst und eine allfällige Vertwistung aufgehoben, so dass die Kabeladern lose und mehr und weniger gestreckt vorliegen und für mögliche weitere Bearbeitungsschritte bereit sind.

Die erfindungsgemässe Kabelbearbeitungseinrichtung eignet sich insbesondere zur Bearbeitung von vertwisteten Kabeladern eines mehradrigen, sich entlang einer Kabellängsachse erstreckenden Kabels. Das Kabel kann ein Rundkabel sein, wobei die Kabeladern kreisförmig gebündelt sein können. Zusätzlich können die kreisförmig gebündelten Kabeladern vertwistet um einen Füller angeordnet sein. Jede Kabelader kann einen Leiter aus einem elektrisch leitfähigen Material wie zum Beispiel Kupfer und eine den Leiter umhüllende Isolierung aufweisen. Weiterhin kann das Kabel als geschirmtes Kabel ausgestaltet sein, wobei das geschirmte Kabel ein Schirmgeflecht aus einem elektrisch leitfähigen Material und gegebenenfalls eine Schirmfolie umfasst.

In einer ersten Ausführungsform können die Trennelemente sternförmig um die Kabellängsachse angeordnet und in radialer Richtung gegen die Kabeladern bzw. gegen die Kabellängsachse bewegbar sein. Bevorzugt sind die Trennelemente derart angeordnet, dass sie in einer Ruhestellung vom Kabel beabstandet sind und die Kabeladern nicht berühren. Nach einer Zustellbewegung in radialer Richtung fährt das Trennelement zwischen jeweils zwei benachbarten Kabeladern und bewirkt ein Separieren der Kabeladern. Am Ende der Zustellbewegung befinden sich die Trennelemente in einer Eingreifstellung. Die zwischen der Ruhestellung und Eingreifstellung bewegbaren Trennelemente können mittels elektrisch, pneumatisch oder auf andere Weise wirkenden Antriebsmitteln bewegt werden.

Ein besonders gutes Separationsergebnis lässt sich erreichen, wenn je Kabelader des zu bearbeitenden mehradrigen Kabels jeweils ein Trennelement vorgesehen ist. Beispielsweise für ein vieradriges Kabel würde die Kabelbearbeitungseinrichtung demnach vier Trennelemente aufweisen. Die Trennelemente können mittels Antriebsmitteln und/oder Getriebemitteln synchron von der Ruhestellung in die Eingreifstellung bewegt werden.

Die Trennelemente könnten paarweise zu Trennelemente-Paaren zusammengefasst sein, wobei die jeweiligen Trennelemente eines Trennelemente-Paars derart getriebemässig miteinander verbunden sind, dass sie nach Aktivierung eines Antriebsmotors oder eines anderen Antriebsmittels gemeinsam gegenläufig bewegbar sind. Die gegenläufig bewegbaren Trennelemente eines Trennelemente-Paars sind dabei bevorzugt koaxial ausgerichtet.

Das Trennelement kann ein Trennstab mit einer vorzugsweise keilförmigen Spitze zum Eindringen zwischen die Kabeladern und zum Auseinanderdrücken der Kabeladern sein. Die Keilform der Spitze bezieht sich dabei auf die durch die Kabellängsachse vorgegebene Blickrichtung. Zum Bilden der keilförmigen Spitze kann der Trennstab spitz aufeinander zu laufende, abgeflachte Keilflanken aufweisen. Die Keilflanken können einen Keilwinkel einschliessen, der zwischen 20° und 60° liegt. Besonders bevorzugt kann der Keilwinkel etwa 40° betragen. Die Keilflächen können vorteilhaft plane oder konkave Flächen sein. Alternativ zur Keilform könnte die Spitze des Trennstabs auch als Kegel oder Kegelstumpf ausgebildet sein.

Wenn das zu bearbeitende mehradrige Kabel einen zentralen Füller aufweist, um den die Kabeladern angeordnet sind, kann es vorteilhaft sein, wenn die Kabelbearbeitungseinrichtung zum Ablängen des Füllers ein Schneidelement aufweist. Das Schneidelement kann zwischen einer Offenstellung und einer Schneidstellung radial gegen den Füller bewegbar sein. Das Schneidelement könnte ein Messer mit einer zum Beispiel V-förmigen Schneide aufweisen. Bevorzugt ist das Schneidelement als Schneidstempel zum Bilden eines Stanzwerkzeugs ausgestaltet sein.

Nachdem die Kabeladern mittels den vorgängig beschriebenen Trennelementen separiert und gestreckt worden sind, kann ein weiterer Bearbeitungsschritt vorteilhaft sein, um die jeweiligen Kabeladern optimal konfektionieren zu können. Hierzu weist die Kabelbearbeitungseinrichtung ein Formwerkzeug zum Vorformen der freien Aderenden der mittels der Trennelemente separierten Aderenden der Kabeladern des mehradrigen Kabels auf. Mit dem Formwerkzeug können die Kabeladern (bzw. eben genauer die Aderenden der Kabeladern) weiter voneinander beabstandet werden, so dass sie nach Beendigung dieses Arbeitsschrittes idealerweise achsparallel verlaufende, um einen radialen Abstand von beispielsweise 2 mm oder mehr von der Kabellängsachse oder vom zentralen Füller angeordnete Aderenden resultieren. Derart vorgeformte Kabeladern lassen sich einfach erfassen. Die einzelnen Kabeladern können nun einfach abisoliert und weiter konfektioniert werden. Zum Beispiel für die Gehäusebestückung können die Kabeladern nach dem Abisolieren mit Kontakten oder Kabelendhülsen versehen werden. Die absolierten Enden der Kabeladern könnten aber auch direkt in ein Steckergehäuse eingesteckt werden.

Das Formwerkzeug kann eine in axialer Richtung, d.h. in Richtung der Kabellängsachse des mehradrigen Kabels, gegen die Aderenden der Kabeladern bewegbare Führungshülse zum endseitigen Umfassen der Kabeladern aufweisen.

Das Formwerkzeug umfasst einen in axialer Richtung bewegbaren Formstempel mit kanalartigen Aderaufnahmen zum endseitigen Aufnehmen der Kabeladern. Die Kabeladern lassen sich durch Deformieren gemäss der durch die Aderaufnahmen des Formstempels vorgegebenen Kontur in Form bringen und auf diese Weise einfach vorformen.

Der Formstempel kann am freien Ende einen spitz zulaufenden Aufspreizabschnitt und einen an den Aufspreizabschnitt anschliessenden, vorzugsweise zylindrischen Formabschnitt zum Vorgeben einer Kontur für die Aderenden der Kabeladern aufweisen. Mit einem solchen Formstempel kann sichergestellt werden, dass nach Abschluss des Vorform-Prozesses voneinander beabstandete und im Wesentlichen achsparallele Aderenden der Kabeladern des mehradrigen Kabels resultieren.

Wenn das Formwerkzeug den erwähnten Formstempel und die erwähnte Führungshülse umfasst, kann es vorteilhaft sein, wenn der Formstempel und die Führungshülse derart miteinander in Eingriff bringbar sind, dass die Führungshülse den Formstempel wenigstens in einer Schliessstellung koaxial umgibt und die Kabeladern zwischen der Führungshülse und dem Formstempel in der Schliessstellung klemmend oder wenigstens spielfrei zum plastischen Formen der Aderenden aufnehmbar sind.

Vorteilhaft kann es weiter sein, wenn in der Schliessstellung die Führungshülse den Vorteilhaft kann es weiter sein, wenn in der Schliessstellung die Führungshülse den Formstempel in axialer Richtung überragt. Vorteilhaft kann weiter die Länge der Führungshülse grösser als die Länge des Formabschnitts des Formstempels sein; besonders bevorzugt ist die Führungshülsenlänge grösser als die zusammengesetzten Längen des Formabschnitts und Aufspreizabschnitts.

Die Führungshülse kann einen vorzugsweise zylindrischen Anpressabschnitt aufweisen, an den die Aderenden der Kabeladern in der Schliessstellung radial aussen anlegbar sind. Der Anpressabschnitt der Führungshülse kann sich soweit in axialer Richtung erstrecken, dass die vorzuformenden oder vorgeformten Aderenden der Kabeladern über ihre gesamte Länge vom Formabschnitt beaufschlagt sind.

Weiterhin kann der Formstempel eine zentrale, in axialer Richtung verlaufende Einführöffnung beispielsweise in Form einer Bohrung zum Aufnehmen eines Füllers des mehradrigen Kabels aufweisen.

Die Führungshülse kann in axialer Richtung verlaufende Schlitze oder an der Innenseite der Führungshülse angeordnete, nutartige Aussparungen aufweisen, über die die Kabeladern bzw. die Aderenden der Kabeladern nach dem Vorformen freigegeben werden können.

Zum Freigeben der vorgeformten Aderenden ist die Führungshülse gegenüber dem Formstempel drehbar ausgestaltet. Die Führungshülse lässt sich soweit um die Kabellängsachse drehen, bis die Schlitze oder Aussparungen radial über den Aderaufnahmen angeordnet sind.

Die Führungshülse kann eine Aussparung aufweisen, durch die ein Schneidelement zum Ablängen des zentralen Füllers des mehradrigen Kabels führbar ist. Wenn das Formwerkzeug einen Formsstempel aufweist, ist es vorteilhaft, wenn dieser Formstempel ebenfalls eine Aussparung für das Schneidelement aufweist.

Das vorgängig beschriebene Formwerkzeug zum Vorformen der Kabeladern des mehradrigen Kabels könnte mit anderen Trennmitteln zum Separieren der aneinander liegenden, gegebenenfalls vertwisteten Kabeladern vorteilhaft sein. Die eingangs erwähnten wenigstens zwei aufeinander zu bewegbaren Trennelemente, die zwischen die Kabeladern einfahrbar und die kämmend entlang der Kabeladern fahrbar sind, wären in diesem Fall nicht zwingend zu verwenden.

Weitere Einzelmerkmale und Vorteile der Erfindung ergeben sich aus der nachfolgenden Beschreibung eines Ausführungsbeispiels und aus den Zeichnungen. Es zeigen:
- Fig. 1: eine perspektivische Ansicht eines abisolierten Kabelendes eines vieradrigen Kabels mit vier Kabeladern,
- Fig. 2: ein fertiges Kabelende, das ausgehend vom Kabelende gemäss Fig. 1 mittels einer erfindungsgemässen Kabelbearbeitungseinrichtung erzeugt wurde,
- Fig. 3: das Kabelende gemäss Fig. 1 mit zwischen die Kabeladern eindringenden Trennelementen der erfindungsgemässen Kabelbearbeitungseinrichtung in einer Eingreifstellung,
- Fig. 4: die Trennelemente während eines Kämmvorgangs zum Strecken der Kabeladern,
- Fig. 5: die Kabeladern des Kabelendes vor Beaufschlagung durch einen Formstempel eines Formwerkzeugs der Kabelbearbeitungseinrichtung,
- Fig. 6: einen in die Aderenden des Kabels eingeschobener Formstempel der erfindungsgemässen Kabelbearbeitungseinrichtung,
- Fig. 7: einen Längsschnitt durch ein Formwerkzeug mit einem Formstempel in der Stellung gemäss Fig. 6 und mit einer Führungshülse in einer Schliessstellung,
- Fig. 8A: einen Querschnitt durch das Formwerkzeug aus Fig. 7,
- Fig. 8B: eine weitere Querschnittsdarstellung des Formwerkzeugs, jedoch mit gedrehter Führungshülse zum Freigeben der Kabeladern,
- Fig. 9: eine perspektivische Darstellung einer Kabelbearbeitungseinrichtung zur Bearbeitung von Kabeladern eines mehradrigen Kabels,
- Fig. 10: einen Teil der Kabelbearbeitungseinrichtung aus Fig. 9 mit einem Formwerkzeug in einer leicht vergrösserten perspektivischen Darstellung,
- Fig. 11: das Formwerkzeug gemäss Fig. 10 mit einer Maschineneinheit enthaltend einen Formstempel,
- Fig. 12: eine Maschineneinheit enthaltend eine Führungshülse für das Formwerkzeug gemäss Fig. 10,
- Fig. 13: eine vereinfachte perspektivische Darstellung der Kabelbearbeitungseinrichtung in einer Ausgangsstellung,
- Fig. 14: die Kabelbearbeitungseinrichtung gemäss Fig. 13 mit über Kabeladern positionierten Trennelementen in einer Ruhestellung,
- Fig. 15: die Kabelbearbeitungseinrichtung mit in die Kabeladern eingefahrenen Trennelementen,
- Fig. 16: die Kabelbearbeitungseinrichtung nach Beendigung eines mittels den Trennelementen durchgeführten Kämmvorgangs,
- Fig. 17: die Kabelbearbeitungseinrichtung mit einem gegen das Kabelende geführten Formwerkzeug,
- Fig. 18: die Kabelbearbeitungseinrichtung nach dem Rückstellen der Trennelemente in die Ruhestellung,
- Fig. 19: die Kabelbearbeitungseinrichtung mit über die Kabeladern gefahrenen Formhülse des Formwerkzeugs,
- Fig. 20: die Kabelbearbeitungseinrichtung nach Ausfahren des Formstempels in die Formhülse zum Erstellen einer Schliessstellung des Formwerkzeugs,
- Fig. 21: die Kabelbearbeitungseinrichtung nach einer Drehung der Formhülse, und
- Fig. 22: das fertiggestellte Kabelende und die Kabelbearbeitungseinrichtung in der Ausgangsstellung.

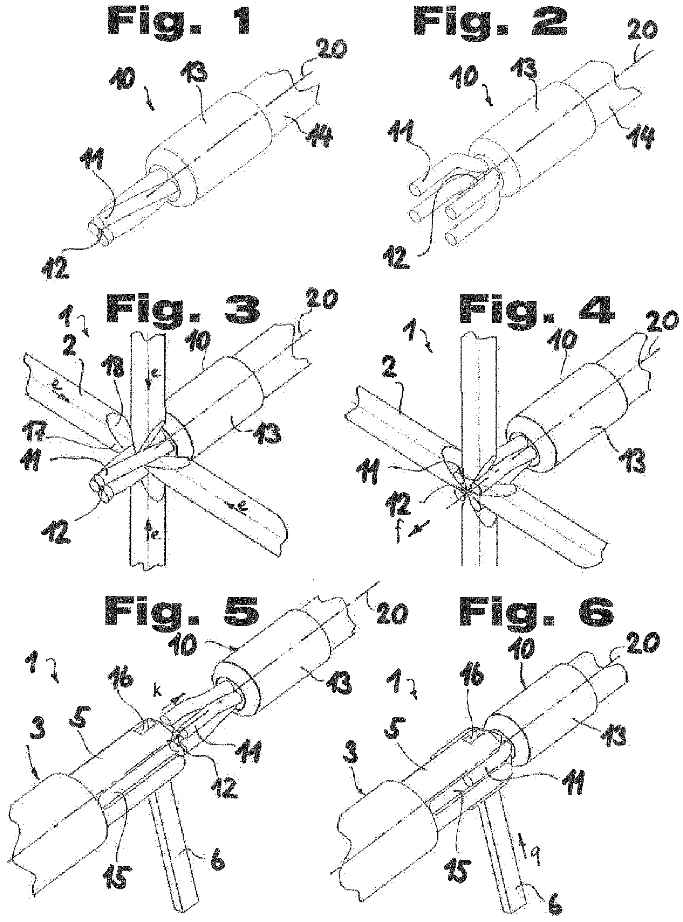

Fig. 1 zeigt ein Kabelende eines mehradrigen Kabels 10. Das vorliegende Kabel 10 ist als Rundkabel ausgestaltet und weist vier Kabeladern 11 auf, die kreisförmig gebündelt und vertwistet um einen im Querschnitt kreisförmigen, zentralen Füller 12 angeordnet sind. Der Füller 12, der beispielsweise aus einem Isolationsmaterial oder Textilfasern besteht, gibt im Wesentlichen die runde bzw. kreisförmige Konfiguration des Kabels 10 vor und bewirkt eine Stabilisierung des Kabels. Das vieradrige Kabel 10 weist weiter eine Mantelisolierung 14 auf, die die Kabeladern 11 nach aussen hin schützen. Zur elektrischen Abschirmung weist das vieradrige Kabel 10 ein Schirmgeflecht 13 aus einem elektrisch leitfähigen Material auf. Weiterhin könnte das Kabel 10 eine (nicht dargestellte) Schirmfolie aufweisen, die beispielsweise aus einer Kunststofffolie besteht, auf die eine Aluminiumschicht aufgebracht ist. Derartige geschirmte, vieradrige Rundkabel 10 werden beispielsweise als Signalkabel in Autos oder anderen Kraftfahrzeugen eingesetzt. Die Kabeladern 11 sind in Fig. 1 sowie in den nachfolgenden Figuren lediglich symbolhaft dargestellt. Die Kabeladern 11 weisen jeweils einen Leiter und eine den Leiter umhüllende Isolierung beispielsweise aus Kunststoff auf. Die Leiter sind üblicherweise Litzen oder Drähte aus elektrisch leitendem, metallischem Material wie etwa Kupfer oder Aluminium.

Bevor mit der nachfolgend im Detail beschriebenen Bearbeitung der Kabeladern 11 mittels der erfindungsgemässen Kabelbearbeitungseinrichtung begonnen werden kann, müssen die Kabeladern 11 von der Mantelisolierung 14 und vom Schirmgeflecht 13 auf die dem Fachmann bekannte Weise endseitig befreit werden. Das in Fig. 1 dargestellte Ende des Kabels 10 ist entsprechend schon abisoliert und das Schirmgeflecht 13 wurde umgelegt, so dass die Aderenden der Kabeladern 11 nach aussen hin freiliegen. Ein derart vorbereitetes Kabelende 10 kann nun mittels der nachfolgend im Detail beschriebenen Kabelbearbeitungseinrichtung bearbeitet werden. Nach Beendigung des Bearbeitungsprozesses mittels der (hier noch nicht dargestellten) Kabelbearbeitungseinrichtung liegt schliesslich ein Kabel 10 vor, wie es in Fig. 2 gezeigt ist. Die einzelnen Kabeladern 11 sind voneinander beabstandet und gleichmässig um die Kabellängsachse 20 herum angeordnet. Die Aderenden der Kabeladern 11 sind dabei achsparallel in Bezug auf die Längsmittelachse 20 ausgerichtet. Die Aderenden der Kabeladern 11 sind um einen radialen Abstand von beispielsweise wenigstens 2 mm vom Füller 12 entfernt. In Fig. 2 ist der Füller 12 gegenüber den Kabeladern 11 gekürzt.

Die Figuren 3 und 4 zeigen Trennelemente 2 einer Kabelbearbeitungseinrichtung, mit denen die vertwisteten Kabeladern 11 voneinander separiert und ausgerichtet werden können. Ausgehend vom vorbereiteten Kabel gemäss Fig. 1 werden Trennelemente 2 zwischen die Kabeladern 11 eingefahren. Die Zustellbewegung zum Einfahren der Trennelemente 2 ist in Fig. 3 mit Pfeilen e angedeutet. Damit jede Kabelader 11 vereinzelt werden kann, weist die Kabelbearbeitungseinrichtung 1 vier Trennelemente 2 in einer Kreuzanordnung auf. Für die Zustellbewegung in radialer Richtung werden (nicht dargestellte) Antriebsmittel eingesetzt. Besonders bevorzugt werden die Trennelemente 2 dabei paarweise oder gesamthaft synchron bewegt.

Das Trennelement 2 ist vorliegend beispielhaft als Trennstab mit einem zylindrischen Grundkörper ausgestaltet. Die Trennstäbe 2 weisen keilförmige Spitzen 17 zum Eindringen zwischen die Kabeladern 11 und zum Auseinanderdrücken der benachbarten Kabeladern 11 auf. Zum Bilden des (in Bezug auf die durch die Kabellängsachse 20 vorgegebene Blickrichtung) keilförmigen Spitze 17 weist das Trennelement 2 spitz aufeinander zu laufende, abgeflachte Keilflanken 18 auf, die einen Keilwinkel von beispielhaft 15° einschliessen. Am Ende der Zustellbewegung in radialer Richtung e könnten die vorderen Enden der keilförmigen Spitzen 17 der Trennelemente 2 den Füller 12 berühren. Anstelle der hier gezeigten keilförmigen Spitze 17 könnte die Spitze des Trennstabs 2 auch als Kegel oder Kegelstumpf ausgebildet sein.

Nachdem die Trennelemente 2 die Eingreifstellung (Fig. 3) erreicht haben, werden die Trennelemente 2 in axialer Richtung bewegt. Durch das Fahren der Trennelemente 2 entlang der Kabeladern 11 in der Art eines Kämmvorgangs werden die Aderenden der Kabeladern 11 gestreckt. Der Kämmvorgang ist in Fig. 4 durch einen Pfeil f angedeutet.

Nach Abschluss des Separierungs- und Kämmvorgangs schaut das Ende des Kabels 10 vereinfacht wie das in Fig. 5 dargestellte Kabelende aus.

Nun kann der anhand der Figuren 5 und 6 erläuterte Vorformprozess zum Vorformen der Kabeladern 11 durchgeführt werden. Fig. 5 zeigt einen Formstempel 5 eines Formwerkzeugs 3 zum Vorformen der Kabeladern 11. Der Formstempel 5 wird in axialer Richtung gegen das Kabelende des Kabels 10 bewegt und dringt in die Schar aus den vereinzelten und gestreckten Kabeladern 11 ein. Diese Bewegung ist mit einem Pfeil k angedeutet. Anstelle den Formstempel 5 in axialer Richtung k gegen das Kabelende zu bewegen, könnte selbstverständlich auch das Kabel 10 - bei feststehendem Formstempel 5 - in Gegenrichtung zum Pfeil k in axialer Richtung bewegt werden. Der Formstempel weist vier kanalartige Aderaufnahmen 15 für die Kabeladern 11 auf. In Fig. 6 ist der Formstempel 5 in die Kabeladern 11 eingedrungen. Die Aderenden der Kabeladern 11 befinden sich in den Aderaufnahmen 15 und liegen an der Kontur des Formstempels 5 an. Durch Deformieren der Kabeladern 11 gemäss der Kontur des Formstempels 5 ergibt sich die vorteilhafte, in Fig. 2 dargestellte Formgebung und Positionierung der Kabeladern 11. Weiter ist ein Schneidelement 6 vorgesehen, mit dem der Füller abgelängt werden kann. Zum Ablängen des Füllers 12 wird das Schneidelement 6 in q-Richtung bewegt. Eine Aussparung, durch die das Schneidelement 6 führbar ist, ist mit 16 bezeichnet. Das Schneidelement 6 ist als Schneidstempel zum Bilden eines Stanzwerkzeugs ausgestaltet.

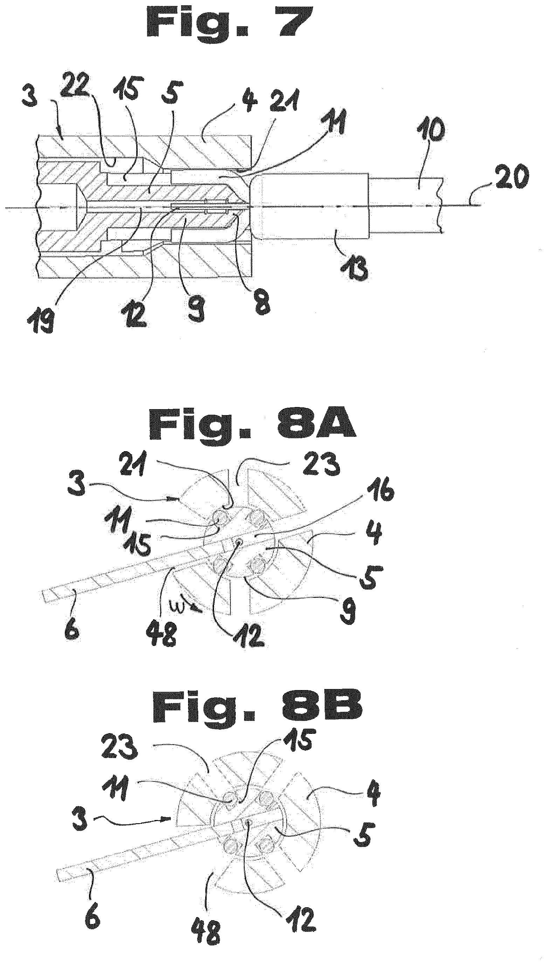

Wenn das Formwerkzeug 3 nur einen Formstempel 5 aufweisen würde, könnte es passieren, dass beim Eindringen des Formstempels 5 in die Kabeladern 11 die Aderenden zu stark aufgespreizt werden und sich von der Kontur des Formstempels 5 entfernen. Damit die Kabeladern 11 an der Kontur des Formstempels 5 verbleiben und so auf die gewünschte Art und Weise vorgeformt werden, verfügt das Formwerkzeug über eine Führungshülse 4, mit der eine definierte Deformation der Kabeladern 11 sichergestellt werden kann. Die bevorzugte Variante eines Formwerkzeugs 3 zum Vorformen der Kabeladern 11 ist in der nachfolgenden Fig. 7 dargestellt.

Fig. 7 zeigt einen Längsschnitt durch ein Formwerkzeug 3, das innen einen Formstempel 5 und aussen eine Führungshülse 4 aufweist. Die Führungshülse 4 ist koaxial zum Formstempel 5 ausgerichtet. Die sich entlang der Kabellängsachse 20 erstreckende Führungshülse 4 ist axial verschiebbar auf dem Formstempel 5 gelagert. In der in Fig. 7 gezeigten Schliessstellung sind der Formstempel 5 und die Führungshülse 4 derart miteinander in Eingriff gebracht, dass die Kabeladern 11 zwischen der Führungshülse 4 und dem Formstempel 5 klemmend zum plastischen Formen der Aderenden 11 aufgenommen sind.

Aus Fig. 7 geht weiter hervor, dass der Formstempel 5 am freien Ende einen spitz zulaufenden Aufspreizabschnitt 8 und einen an den Aufspreizabschnitt anschliessenden zylindrischen Formabschnitt 9 zum Vorgeben der Kontur zum Vorformen der Kabeladern 11 aufweist. An den Anpressabschnitt 21 schliesst rückseitig ein aufgeweiteter Abschnitt 22 in Form einer Bohrung an. Der Formstempel 5 weist sodann eine Einführöffnung 19 zum Aufnehmen des zentralen Füllers 12 des Kabels 10 auf.

Fig. 8A zeigt einen Querschnitt durch das Formwerkzeug 3 in der Schliessstellung. Die Kabeladern 11 liegen ersichtlicherweise im Bereich des Formabschnitts 9 an der den Anpressabschnitt 21 bildenden zylindrischen Innenseite 21 der Führungshülse 4 an, so dass die Kabeladern 11 zum Vorformen wie gewünscht deformiert werden. Durch Drehen der Führungshülse in Richtung des Pfeils w um die Längsmittelachse 20 werden die Schlitze 23 über die Kabeladern 11 gebracht. Diese Stellung ist in Fig. 8B dargestellt. Nun kann das fertige Kabelende des Kabels 10 vom Formwerkzeug 3 entfernt werden. Die gedrehte Führungshülse 4 ermöglicht es, das Kabel freizugeben, ohne dass die Kabeladern 11 auf unerwünschte Weise bei einem Abziehvorgang verformt werden. In den Figuren 8A und 8B ist weiter erkennbar, dass die Aussparung 48 zum Durchführen des Schneideelemnts 6 verbreitert ist, um die Drehbewegung w (Fig. 8A) zuzulassen.

Das in den Figuren 5 bis 8 beschriebene Formwerkzeug 3 zum Vorformen der Kabeladern des mehradrigen Kabels 10 könnte - anstatt der Anordnung mit den radial gegen die Kabellängsachse bewegbaren Trennelemente - mit anderen Trennmitteln zum Separieren der aneinander liegenden, gegebenenfalls vertwisteten Kabeladern vorteilhaft sein. Vorstellbar wäre es, die Kabeladern beispielsweise mittels Druckluft in der Art des in der US 2014/0115855 A1 offenbarten Verfahrens vorher zu separieren.

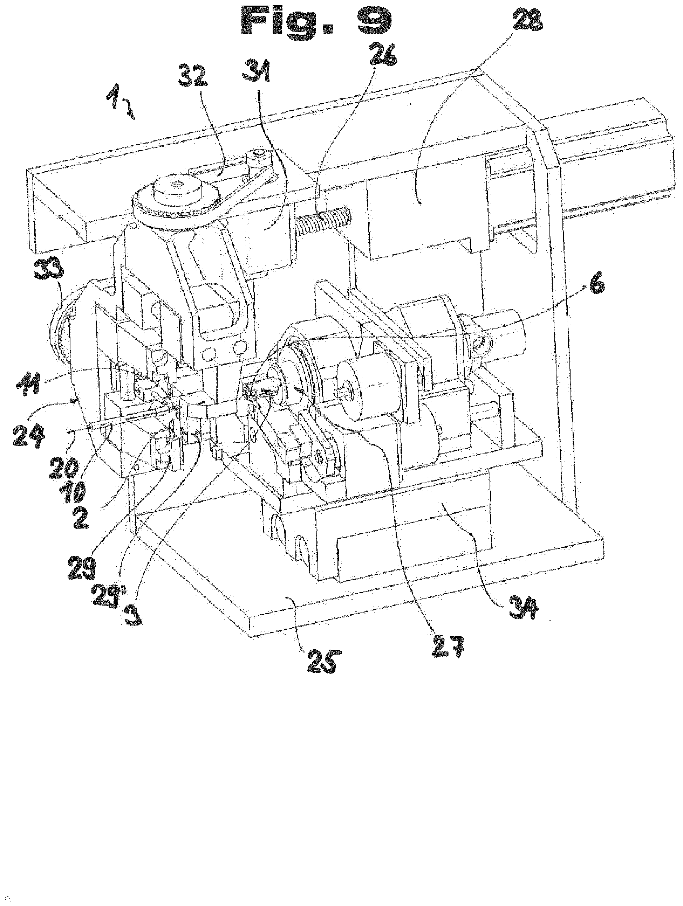

Konstruktive Details zur Ausgestaltung einer Kabelbearbeitungseinrichtung 1 zur Bearbeitung von Kabeladern eines vieradrigen Kabels sind aus den Figuren 9 bis 12 entnehmbar. Fig. 9 zeigt eine Gesamtansicht der Kabelbearbeitungseinrichtung 1 mit einem Bearbeitungskopf 24, auf dem die Trennelemente 2 angeordnet sind. Der Bearbeitungskopf 24 wird daher nachfolgend auch als Separations- und Ausrichtungskopf bezeichnet. Die mit 20 bezeichnete Kabellängsachse des für die Bearbeitung durch die Kabelbearbeitungseinrichtung 1 bereitgestellten Kabels 10 gibt auch die Maschinenhauptachse der Kabelbearbeitungseinrichtung 1 vor. Der Separations- und Ausrichtungskopf 24 ist in axialer Richtung entlang der Kabellängsachse 20 bzw. entlang der Maschinenhauptachse über eine Servoachse mit einem eine Spindel 26 umfassenden Spindelantrieb 28 hin und her bewegbar. Der Separations- und Ausrichtungskopf 24 weist vier Trennelemente auf, die radial gegen die Kabeladern 11 des Kabels 10 bewegbar sind. Die Trennelemente 2 sind stabförmig ausgebildet und werden nachfolgend auch als Trennstifte bezeichnet. Jedes Trennelement 2 ist in einem Stifthalter 29 gehalten. Die Kabelbearbeitungseinrichtung 1 umfasst eine Konsole 25 zum Tragen der Maschinenkomponenten.

Jeweils zwei einander gegenüberliegende Stifthalter 29 für die Trennstifte sind über Zahnstangengetriebe gemeinsam radial gegen die Kabellängsachse 20 bewegbar. Ein elektrischer Antriebsmotor 31 zum Betreiben der beiden horizontal bewegbaren Stifthalter 29' ist mit 31 bezeichnet. Über einen Riemen 32 ist der Antriebsmotor 31 mit einem der Zahnstangengetriebe verbunden. Das zweite Zahnstangengetriebe, mit dem die vertikal bewegbaren Stifthalter 29 bewegbar sind, wird durch einen zweiten Antriebsmotor über den mit 33 bezeichneten Riemen bewegt. Die beiden Antriebsmotoren 31 werden vorteilhaft derart betrieben, dass die Trennelemente 2 synchron gegen die Kabeladern 11 bewegt werden.

Die Kabelbearbeitungseinrichtung 1 weist weiter einen nachfolgend als "Vorformkopf" bezeichneten Bearbeitungskopf 27 auf. Der Bearbeitungskopf 27, der das Formwerkzeug 3 sowie das Schneidelement 6 trägt, kann als Ganzes in axialer Richtung entlang der Kabellängsachse 20 mit pneumatischen Mitteln oder anderen Antriebsmitteln hin und her bewegt werden.

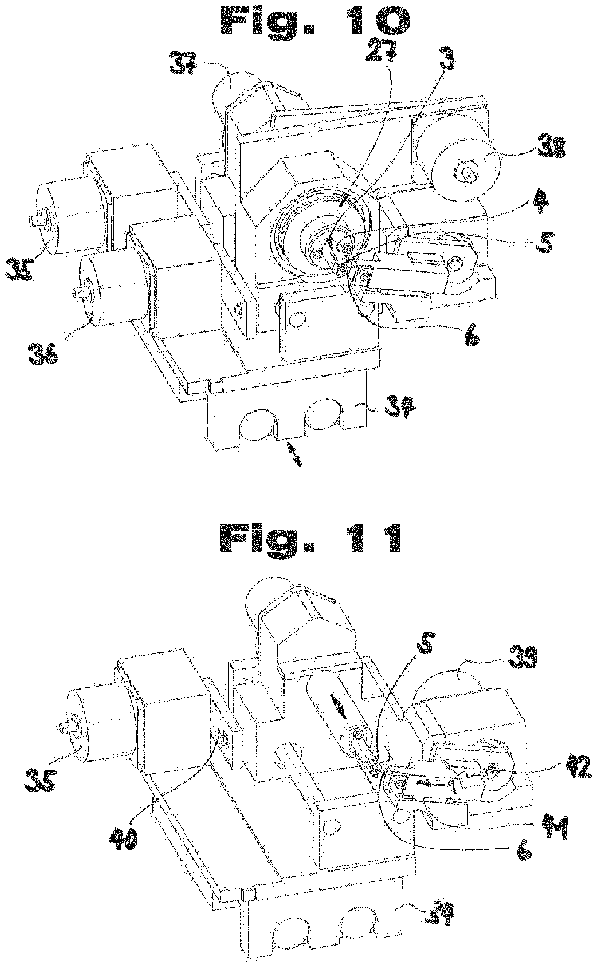

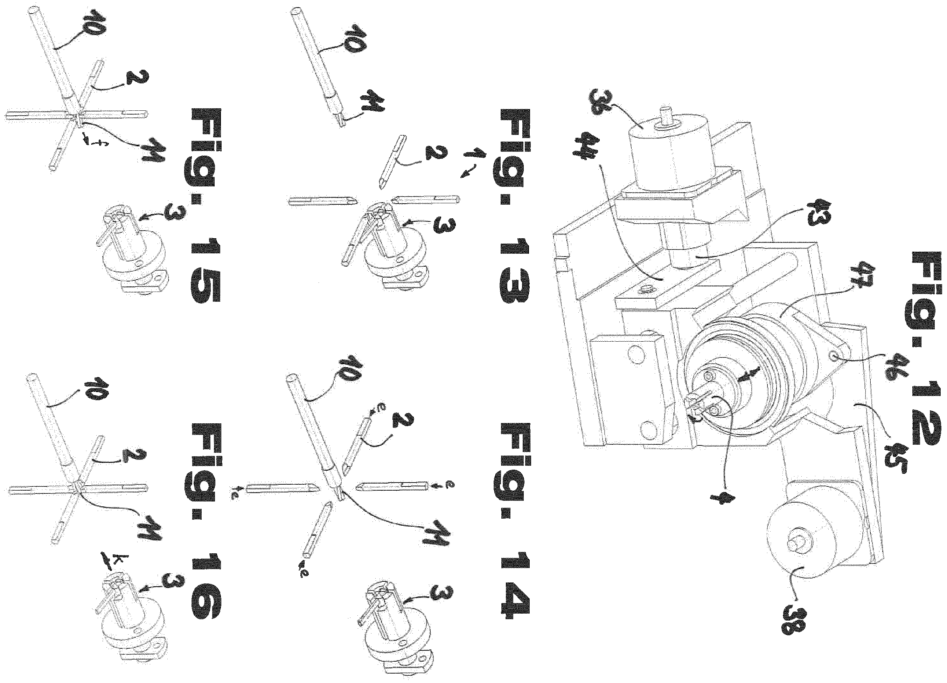

Fig. 10 zeigt eine Maschineneinheit der Kabelbearbeitungseinrichtung 1 mit dem Vorformkopf 27. Mit einem Doppelpfeil ist in Fig. 12 angedeutet, dass die Maschineneinheit mit dem Vorformkopf 27 auf einem Schlitten 34 angeordnet ist und als Ganzes entlang der Kabellängsachse hin und her bewegt werden kann. Zum Betreiben der einzelnen Komponenten des Vorformkopfs 27 sind insgesamt vier Antriebe vorgesehen. Der mit 35 bezeichnete Antrieb dient zum axialen Bewegen des Formstempels 5 des Formwerkzeugs 3. Mit dem Antrieb 36 kann die Führungshülse 4 in axialer Richtung bewegt werden. Ein Absaugrohr 37 dient zum Absaugen der mittels des Schneidelements abgetrennten Füllerteile des Füllers des Kabels zum Entfernen aus der Kabelbearbeitungseinrichtung 1.

In Fig. 11 ist die dem Formstempel 5 zugeordnete Anordnung dargestellt. Mit dem Antrieb 35, der beispielhaft als pneumatischer Drehantrieb ausgestaltet ist, kann über einen (hier nicht erkennbaren) Exzenter und einer mit dem diesen verbundenen Schubstange 40 der Formstempel 5 in axialer Richtung hin und her bewegt werden. Diese Bewegung ist in Fig. 11 mit einem Doppelpfeil angedeutet. Weiterhin verfügt die in Fig. 11 dargestellte Anordnung ein Schneidelement 6, das mittels eines Antriebs 39 in q-Richtung zum Ablängen des Füllers des Kabels bewegbar ist. Die Antriebslösung zum Betreiben des Schneidelements 6 ist im vorliegenden Ausführungsbeispiel auf ähnliche Art und Weise wie diejenige für das Formwerkzeug ausgestaltet. Der Antrieb 39 zum Betreiben des Schneidelements 6 ist als pneumatischer Drehantrieb ausgestaltet, der mittels eines mit der Antriebsachse des Drehantriebs verbundenen Exzenters 42 das Schneidelement 6 in die Bewegungsrichtung q verschieben kann.

Fig. 12 zeigt die der Führungshülse 4 zugeordnete Anordnung. Die Führungshülse 4 lässt sich mittels eines als pneumatischen Drehantrieb ausgestalteten Antriebs 36 über einen Exzenter und eine Schubstange 44 in axialer Richtung hin und her bewegen. Die axiale Beweglichkeit der Führungshülse 4 ist in Fig. 12 mit einem Doppelpfeil angedeutet. Weiterhin kann die Führungshülse 4 begrenzt um die Kabellängsachse bzw. um die Maschinenhauptachse rotiert werden. Diese Drehbewegung ist in Fig. 12 mit einem gebogenen Pfeil angedeutet. Zum Drehen der Führungshülse 4 dient der mit 38 bezeichnete Antrieb. Dieser Antrieb 38 ist ebenfalls als pneumatischer Drehantrieb ausgestaltet, der über einen Exzenter sowie eine Schubstange 45 gelenkig mit einem Anschlussteil 47, an dem die Führungshülse 4 befestigt ist, gelenkig verbunden ist. Die gelenkige Verbindung zwischen Schubstange 45 und Anschlussteil 47 ist mit 46 bezeichnet.

Aus den Figuren 13 bis 22 sind die einzelnen Arbeitsschritte des Verfahrens zum Bearbeiten der Kabeladern 11 des Kabels 10 unter Verwendung der vorgängig beschriebenen Kabelbearbeitungseinrichtung 1 gezeigt. Fig. 13 betrifft eine Ausgangsstellung der Kabelbearbeitungseinrichtung 1. Das mehradrige Kabel 10 kann mittels eines (nicht dargestellten) Kabelgreifers an die Kabelbearbeitungseinrichtung 1 herangeführt werden und entsprechend der Ausrichtung der Trennelemente 2 in die richtige Winkellage gebracht werden, wodurch das abisolierte und von der Abschirmung befreite Kabelende mit den Kabeladern 11 bereit ist. Danach werden die in der Ruhestellung sich befindenden Trennelemente 2 über das Kabelende des Kabels 10 in eine axiale Startposition gebracht. Diese Stellung ist in Fig. 14 gezeigt. Die Trennelemente 2 können nun in e-Richtung radial gegen die Kabeladern bewegt werden. Die Trennelemente 2 dringen bei der Zustellbewegung zwischen die Kabeladern 11 ein. Sobald die Trennelemente 2 die Eingreifstellung gemäss Fig. 15 erreicht haben, werden die Trennelemente in f-Richtung bewegt und die Trennelemente 2 kämmend entlang den Kabeladern 11 gefahren. In der in Fig. 15 dargestellten axialen Position kontaktierne die vorderen Enden der Trennelemente 2 den (hier nicht erkennbaren) Füller nicht. Erst sobald die Trennelemente 2 nach Beendigung des Kämmvorgangs die axiale Endposition gemäss Fig. 16 erreicht haben, werden die Trennelemente 2 nochmals leicht in radialer Richtung bewegt und in Anschlag an den Füller gebracht, wodurch der Füller lagemässig gesichert und zentriert ist.

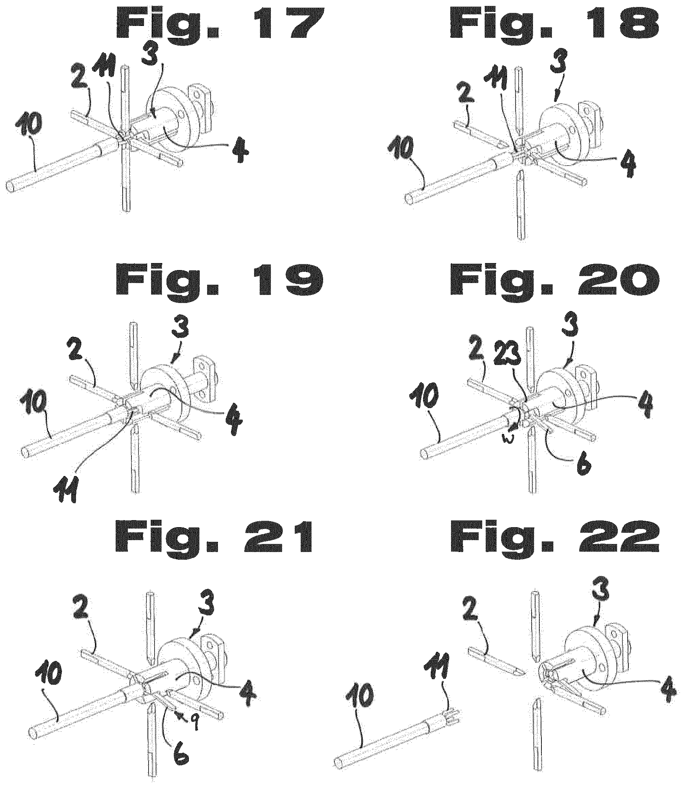

Ausgehend von der in Fig. 16 gezeigten Stellung wird nun das Formwerkzeug 3 gegen das Kabelende des Kabels 10 in Richtung des Pfeils k gefahren. Dabei wird der Füller des Kabels 10 in die Einführöffnung (19, vgl. Fig. 7) des Formstempels 5 des Formwerkzeugs 3 eingeführt. Diese Stellung ist in Fig. 17 dargestellt. Nun werden die Trennelemente 2 in radialer Richtung zurück gefahren bis sie wieder die Ruhestellung einnehmen. Die Kabelbearbeitungseinrichtung 1 in dieser Stellung ist in Fig. 18 gezeigt. Danach wird die Führungshülse 4 des Formwerkzeugs 3 in axialer Richtung über die Kabeladern 11 gefahren. Fig. 19 zeigt die Kabelbearbeitungseinrichtung 1 mit ausgefahrener Führungshülse 4, in der die Kabeladern 11 von der Führungshülse 4 umfasst sind. Danach wird der Formstempel 5 ausgefahren und eine Schliessstellung des Formwerkzeugs 3 wird erreicht, in der die Kabeladern 11 geformt werden. Die Kabelbearbeitungseinrichtung 1 mit dem Formwerkzeug 3 in Schliessstellung ist in Fig. 20 gezeigt. Nun wird die Führungshülse 4 in Richtung des Pfeils w gedreht, um die Schlitze 23 über die Kabeladern 11 zu bringen. Damit ist es möglich, das Formwerkzeug vom Kabel 10 zu entfernen, ohne dass die vorgeformten Kabeladern 11 beim Abziehvorgang beaufschlagt werden und so eine unerwünschte Nachverformung vermieden werden kann. Nach Drehung der Führungshülse 4 befindet sich das Formwerkzeug 3 in der Stellung gemäss Fig. 21, in der der Füller mittels des in q-Richtung bewegten Schneidelements 6 abgelängt wird. Schliesslich wird die Kabelbearbeitungseinrichtung 1 wieder in ihre Ausgangsstellung gebracht; das Kabelende des Kabels 10 ist nun fertiggestellt. Diese letzte Stellung ist in Fig. 22 gezeigt.

Die vorgängig beschriebenen Ausführungsbeispiele sind auf die endseitige Bearbeitung von vier Kabeladern eines geschirmten, vieradrigen Rundkabels 10 gerichtet. Die erfindungsgemässe Kabelbearbeitungseinrichtung 1 würde sich selbstverständlich auch für andere geschirmte oder ungeschirmte, mehradrige Rundkabel und insbesondere für Kabel mit weniger oder mehr als vier Kabeladern eignen. Neben Rundkabeln sind auch andere Kabelkonfigurationen denkbar. Weiterhin kann das Kabel mit oder ohne Füller ausgestattet sein. Wenn beispielsweise ein dreiadriges Kabel mit einer Kabelbearbeitungseinrichtung in der vorgängig beschriebenen Art bearbeitet werden soll, dann würde die Kabelbearbeitungseinrichtung drei Trennelemente aufweisen. Entsprechend wäre auch der Formstempel des Formwerkzeugs auszugestalten, der dann drei Aderaufnahmen für die drei Kabeladern aufweisen würde. Auch für fünfadrige Kabel oder Kabel mit höherer Aderzahl könnte eine entsprechend angepasste Kabelbearbeitungseinrichtung vorteilhaft sein.

## Patentansprüche

1. Kabelbearbeitungseinrichtung zur Bearbeitung von Kabeladern (11) eines mehradrigen Kabels (10) mit wenigstens zwei aufeinander zu bewegbaren Trennelementen (2), die zwischen die Kabeladern (11) einfahrbar sind, wobei die Trennelemente (2) kämmend entlang der Kabeladern (11) fahrbar sind, **dadurch gekennzeichnet, dass** die Kabelbearbeitungseinrichtung (1) ein Formwerkzeug (3) zum Vorformen der mittels der Trennelemente (2) separierten Aderenden der Kabeladern (11) des mehradrigen Kabels (10) aufweist, wobei das Formwerkzeug (3) einen in axialer Richtung (20), d.h. in Richtung der Kabellängsachse des mehradrigen Kabels, bewegbaren Formstempel (5) mit kanalartigen Aderaufnahmen (15) zum endseitigen Aufnehmen der Kabeladern (11) umfasst.

2. Kabelbearbeitungseinrichtung nach Anspruch 1, **dadurch gekennzeichnet, dass** die Trennelemente (2) sternförmig angeordnet und in radialer Richtung gegen die Kabellängsachse (20) des Kabels (10) bewegbar sind

3. Kabelbearbeitungseinrichtung nach Anspruch 1 oder 2, **dadurch gekennzeichnet, dass** je Kabelader (11) des zu bearbeitenden mehradrigen Kabels (10) jeweils ein Trennelement (2) vorgesehen ist.

4. Kabelbearbeitungseinrichtung nach einem der Ansprüche 1 bis 3, **dadurch gekennzeichnet, dass** das Trennelement (2) ein Trennstab mit einer Spitze (17) zum Eindringen zwischen die Kabeladern (11) und zum Auseinanderdrücken der Kabeladern (11) ist.

5. Kabelbearbeitungseinrichtung nach einem der Ansprüche 1 bis 4, **dadurch gekennzeichnet, dass** die Kabelbearbeitungseinrichtung (1) ein Schneidelement (6) zum Ablängen eines zentralen Füllers (12) des mehradrigen Kabels (10) aufweist.

6. Kabelbearbeitungseinrichtung nach einem der Ansprüche 1 bis 5, **dadurch gekennzeichnet, dass** das Formwerkzeug (3) eine in axialer Richtung (20) bewegbare Führungshülse (4) zum endseitigen Umfassen der Kabeladern umfasst.

7. Kabelbearbeitungseinrichtung nach einem der Ansprüche 1 bis 6, **dadurch gekennzeichnet, dass** der Formstempel (5) einen spitz zulaufenden Aufspreizabschnitt (8) und einen an den Aufspreizabschnitt anschliessenden vorzugsweise zylindrischen Formabschnitt (8) zum Vorgeben einer Kontur für die Aderenden der Kabeladern (11) aufweist.

8. Kabelbearbeitungseinrichtung nach einem der Ansprüche 1 bis 7, **dadurch gekennzeichnet, dass** das Formwerkzeug (3) einen Formstempel (5) und eine Führungshülse (4) umfasst, die derart miteinander in Eingriff bringbar sind, dass die Führungshülse (4) den Formstempel (5) in einer Schliesstellung koaxial umgibt und die Kabeladern (11) zwischen der Führungshülse (4) und dem Formstempel (5) in der Schliesstellung vorzugsweise klemmend oder spielfrei zum plastischen Formen der Aderenden aufnehmbar sind.

9. Kabelbearbeitungseinrichtung nach Anspruch 8, **dadurch gekennzeichnet, dass** der Formstempel (5) einen zentrale, in axialer Richtung (20) verlaufende Einführöffnung (19) zum Aufnehmen eines Füllers (12) des mehradrigen Kabels (10) aufweist.

10. Kabelbearbeitungseinrichtung nach einem der Ansprüche 1 bis 9, **dadurch gekennzeichnet, dass** die Führungshülse (4) in axialer Richtung (x) verlaufende Schlitze (23) zum Freigeben der vorgeformten Kabeladern (11) aufweist.

11. Kabelbearbeitungseinrichtung nach einem der Ansprüche 1 bis 10, **dadurch gekennzeichnet, dass** die Führungshülse (4) gegenüber dem Formstempel (5) drehbar ausgestaltet ist.

## Claims

1. Cable processing device for processing cable cores (11) of a multi-core cable (10), comprising at least two separating elements (2) which can be moved towards one another and can be introduced between the cable cores (11), it being possible for the separating elements (2) to move along the cable cores (11) in a combing manner, **characterized in that** the cable processing device (1) has a forming tool (3) for preforming the core ends of the cable cores (11) of the multi-core cable (10) that are separated by means of the separating elements (2), the forming tool (3) having a forming die (5) that can be moved in the axial direction (20), i.e. in the direction of the longitudinal axis of the multi-core cable, and has channel-like core receptacles (15) for receiving the cable cores (11) at the ends.

2. Cable processing device according to claim 1, **characterized in that** the separating elements (2) are arranged in a star shape and can be moved in a radial direction toward the longitudinal axis (20) of the cable (10).

3. Cable processing device according to either claim 1 or claim 2, **characterized in that** a separating element (2) is provided for each cable core (11) of the multi-core cable (10) to be processed.

4. Cable processing device according to any of claims 1 to 3, **characterized in that** the separating element (2) is a separating rod having a tip (17) for penetrating between the cable cores (11) and for pushing apart the cable cores (11).

5. Cable processing device according to any of claims 1 to 4, **characterized in that** the cable processing device (1) has a cutting element (6) for cutting a central filler (12) of the multi-core cable (10) to length.

6. Cable processing device according to any of claims 1 to 5, **characterized in that** the forming tool (3) comprises a guide sleeve (4) which can be moved in the axial direction (20) for encircling the cable cores at the ends.

7. Cable processing device according to any of claims 1 to 6, **characterized in that** the forming die (5) has a tapered expansion portion (8) and a preferably cylindrical forming portion (8) that adjoins the expansion portion for specifying a contour for the core ends of the cable cores (11).

8. Cable processing device according to any of claims 1 to 7, **characterized in that** the forming tool (3) comprises a forming die (5) and a guide sleeve (4) which can be brought into engagement with one another such that the guide sleeve (4) coaxially surrounds the forming die (5) in a closed position and the cable cores (11) can preferably be received in a clamping or play-free manner between the guide sleeve (4) and the forming die (5) in the closed position for the plastic forming of the core ends.

9. Cable processing device according to claim 8, **characterized in that** the forming die (5) has a central insertion opening (19) which extends in the axial direction (20) for receiving a filler (12) of the multi-core cable (10).

10. Cable processing device according to any of claims 1 to 9, **characterized in that** the guide sleeve (4) has slots (23) extending in the axial direction (x) for releasing the preformed cable cores (11).

11. Cable processing device according to any of claims 1 to 10, **characterized in that** the guide sleeve (4) is designed to be rotatable with respect to the forming die (5).

## Revendications

1. Dispositif de traitement de câble destiné au traitement de conducteurs de câble (11) d'un câble multiconducteur (10), comportant au moins deux éléments de séparation mobiles l'un sur l'autre (2) qui peuvent être déplacés entre les conducteurs de câble (11), les éléments de séparation (2) pouvant être déplacés de manière à s'engrener le long des conducteurs de câble (11), **caractérisé en ce que** le dispositif de traitement de câble (1) présente un outil de moulage (3) destiné à préformer les extrémités des conducteurs de câble (11) du câble multiconducteur (10), séparées au moyen des éléments de séparation (2), l'outil de moulage (3) comprenant une matrice de moulage (5) mobile dans la direction axiale (20), c'est-à-dire dans la direction de l'axe longitudinal du câble multiconducteur, laquelle comporte des logements de conducteur en forme de canal (15) destinés à loger les conducteurs de câble (11) côté extrémité.

2. Dispositif de traitement de câble selon la revendication 1, **caractérisé en ce que** les éléments de séparation (2) sont disposés en forme d'étoile et sont mobiles dans la direction radiale par rapport à l'axe longitudinal (20) du câble (10).

3. Dispositif de traitement de câble selon la revendication 1 ou 2, **caractérisé en ce que** respectivement un élément de séparation (2) est prévu pour chaque conducteur de câble (11) du câble multiconducteur à traiter (10).

4. Dispositif de traitement de câble selon l'une quelconque des revendications 1 à 3, **caractérisé en ce que** l'élément de séparation (2) est une tige de séparation comportant une pointe (17) destinée à pénétrer entre les conducteurs de câble (11) et à écarter les conducteurs de câble (11).

5. Dispositif de traitement de câble selon l'une quelconque des revendications 1 à 4, **caractérisé en ce que** le dispositif de traitement de câble (1) présente un élément de coupe (6) destiné à couper à longueur une matière de remplissage centrale (12) du câble multiconducteur (10).

6. Dispositif de traitement de câble selon l'une quelconque des revendications 1 à 5, **caractérisé en ce que** l'outil de moulage (3) comprend une douille de guidage (4) mobile dans la direction axiale (20), destinée à comprendre les conducteurs de câble côté extrémité.

7. Dispositif de traitement de câble selon l'une quelconque des revendications 1 à 6, **caractérisé en ce que** la matrice de moulage (5) présente une section d'expansion effilée (8) et une section de moulage de préférence cylindrique (8) connectée à la section d'expansion, destinée à définir un contour pour les extrémités des conducteurs des câbles (11).

8. Dispositif de traitement de câble selon l'une quelconque des revendications 1 à 7, **caractérisé en ce que** l'outil de moulage (3) comprend une matrice de moulage (5) et une douille de guidage (4) qui peuvent être amenées en prise l'une avec l'autre, de telle sorte que la douille de guidage (4) entoure coaxialement la matrice de moulage (5) dans une division de fermeture, et que les conducteurs de câble (11) puissent être logés entre la douille de guidage (4) et la matrice de moulage (5) en position fermée de préférence par serrage ou sans jeu pour le moulage plastique des extrémités de conducteur.

9. Dispositif de traitement de câble selon la revendication 8, **caractérisé en ce que** la matrice de moulage (5) présente une ouverture d'insertion centrale (19) s'étendant dans la direction axiale (20), destinée à loger une matière de remplissage (12) du câble multiconducteur (10).

10. Dispositif de traitement de câble selon l'une quelconque des revendications 1 à 9, **caractérisé en ce que** la douille de guidage (4) présente des fentes (23) s'étendant dans la direction axiale (x), destinées à libérer les conducteurs de câble préformés (11).

11. Dispositif de traitement de câble selon l'une quelconque des revendications 1 à 10, **caractérisé en ce que** la douille de guidage (4) est conçue pour pouvoir tourner par rapport à la matrice de moulage (5).
